(19) **Europäisches Patentamt**
**European Patent Office**
**Office européen des brevets**

(11) **EP 2 034 674 B1**

(12) **EUROPÄISCHE PATENTSCHRIFT**

(45) Veröffentlichungstag und Bekanntmachung des Hinweises auf die Patenterteilung:
**25.07.2012 Patentblatt 2012/30**

(51) Int Cl.:
*H04L 12/56* (2006.01)      *H04W 40/12* (2009.01)

(21) Anmeldenummer: **08015476.8**

(22) Anmeldetag: **02.09.2008**

(54) **Verfahren und Netzknoten zum Aufbau einer schleifenlosen Route in einem reaktiven Ad-hoc-Netzwerk**

Method and network nodes for constructing a loop-free route in a reactive ad-hoc network

Procédé et nýud de réseau destinés au montage d'une route sans boucle dans un réseau réactif ad hoc

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.09.2007 EP 07017487**

(43) Veröffentlichungstag der Anmeldung:
**11.03.2009 Patentblatt 2009/11**

(73) Patentinhaber: **Siemens Aktiengesellschaft**
**80333 München (DE)**

(72) Erfinder:
• **Hollick, Matthias**
**64289 Darmstadt (DE)**
• **Mogre, Parag Sudhir**
**64289 Darmstadt (DE)**
• **Schwingenschlögl, Christian, Dr.**
**85640 Putzbrunn (DE)**
• **Ziller, Andreas**
**81827 München (DE)**

(56) Entgegenhaltungen:
**EP-A- 1 564 938      WO-A-2007/055689**

**Beschreibung**

Die Erfindung liegt auf dem Gebiet der Netzwerktechnik und betrifft ein Verfahren und einen Netzknoten zum Aufbau einer schleifenlosen Route in einem reaktiven Ad-hoc-Netzwerk.

Netzwerke ermöglichen eine Übermittlung von Nachrichten zwischen datentechnisch miteinander verbundenen Netzknoten. Um in paketvermittelten Netzwerken die Vorteile einer verbindungsorientierten Datenübertragung zu nutzen, ist es bekannt, so genannte reaktive Datenübertragungsverfahren einzusetzen, bei denen ein Ende-zu-Ende Netzwerkpfad (Route) zur Nachrichtenübermittlung dynamisch aufgebaut wird, welcher nach erfolgter Nachrichtenübermittlung wieder abgebaut werden kann.

Moderne drahtlose Ad-hoc-Netzwerke (Multi-hop-Netzwerke) ermöglichen eine Datenübertragung zwischen Netzknoten ohne eine zentrale Infrastruktur. In solchen Netzwerken gestaltet sich die Bestimmung optimaler Routen aufgrund der sich typischer Weise dynamisch ändernden Netzwerkbedingungen besonders schwierig. In der Praxis hat sich gezeigt, dass reaktive (On-demand-)Routing-Verfahren für diese Aufgabe gut geeignet sind.

Reaktive Routing-Verfahren führen typischer Weise einen zweistufigen Prozess zum Auffinden einer Route zwischen einem Start- und Zielknoten durch. In einer ersten Stufe wird eine Route in Vorwärtsrichtung zum Zielknoten gesucht, wobei das Netzwerk mit einer vom Startknoten generierten Routenanfrage (RREQs = Route Request) im Broadcast-Verfahren geflutet wird. Jeder Netzknoten, der eine solche Routenanfrage empfängt, speichert die Adresse des Nachbarknotens, von dem er die Routenanfrage erhalten hat. Sobald der Zielknoten erstmalig eine Routenanfrage empfängt, generiert er eine Antwortnachricht (RREP = Route Reply), die in einer zweiten Stufe des Prozesses im Unicast-Verfahren in Rückwärtsrichtung entlang des von der Anfragenachricht zurückgelegten Netzwerkpfads zum Startknoten übertragen wird, wodurch die Route im Netzwerk eingerichtet wird.

Bislang eingesetzte reaktive Routing-Verfahren, wie AODV (AODV = Ad-hoc On-Demand Distance Vector) und DSDV (Destination-Sequenced Distance Vector), folgen der Regel, dass jeder Netzknoten nur die jeweils als erste empfangene Anfragenachricht im Broadcast-Verfahren an seine Nachbarknoten weiterleitet. Später eintreffende Anfragenachrichten werden nicht mehr berücksichtigt. Hierdurch kann gewährleistet werden, dass jeder Netzknoten nur einmal in einer selben Route zwischen Start- und Zielknoten enthalten ist. Durch die Verwendung von Zielsequenznummern kann die so genannte "Freshness" einer Route bestimmt werden.

In einem bislang unveröffentlichten reaktiven Routing-Verfahren der Anmelderin, werden Dienstgütemerkmale von Punkt-zu-Punkt Datenlinks zwischen benachbarten Netzknoten für das Aufsuchen und Einrichten einer Ende-zu-Ende Route zwischen einem Start- und Zielknoten berücksichtigt. Zu diesem Zweck werden in den Anfragenachrichten Maßzahlen für Dienstgütemerkmale gespeichert, so dass vom Zielknoten eine Route anhand der gespeicherten Dienstgütemerkmale der Anfragenachrichten bestimmt werden kann.

Um dieses Verfahren zur Routenfindung zu optimieren, ist es vorteilhaft, wenn jeder Netzknoten eintreffende Anfragenachrichten während einer ersten Ablaufzeit puffert, auf die Maßzahlen für Qualitätsmerkmale der gepufferten Anfragenachrichten eine Bewertungsfunktion anwendet und gemäß einer wählbaren Auswahlregel für die hierbei gewonnenen Bewertungsergebnisse eine am besten bewertete Anfragenachricht zur Weiterleitung im Broadcast-Verfahren auswählt. Besonders vorteilhaft ist es, wenn ein Netzknoten auch noch während einer nach der ersten Ablaufzeit endenden zweiten Ablaufzeit Anfragenachrichten im Netzknoten puffert. In diesem Fall können auch nach Ablauf der ersten Ablaufzeit gepufferte Anfragenachrichten für eine Weiterleitung der Antwortnachricht berücksichtigt werden, so dass die Antwortnachricht gegebenenfalls auf einem günstigeren Netzwerkpfad zum Startknoten geleitet wird, falls nach Aussenden der Anfragenachricht eine besser bewertete Anfragenachricht vom Netzknoten empfangen wurde.

Jedoch kann das Problem auftreten, dass eine vom Netzknoten weitergeleitete Anfragenachricht ein zweites Mal beim Netzknoten eintrifft und somit auf einem Schleifenpfad zum Netzknoten zurückkehrt. Der Netzknoten kann die Schleifenbildung nicht ohne weiteres erkennen, da in einer Anfragenachricht der zurückgelegte Netzwerkpfad nicht enthalten ist. Wenn der Netzknoten in diesem Fall eine Antwortnachricht vom Zielknoten empfängt und falls eine auf einem Schleifenpfad zum Zielknoten zurückgekehrte Anfragenachricht besser bewertet wird als die ausgesandte Anfragenachricht, tritt die unerwünschte Situation ein, dass die Antwortnachricht auf den Schleifenpfad weitergeleitet wird und die Antwortnachricht dort umläuft, bis eine Lebenszeit der Antwortnachricht abläuft.

Die nachveröffentlichte internationale Patentanmeldung WO 2009/013201 A1 beschreibt ein Verfahren zum Aufbau einer Route in einem Netzwerk, bei dem ein Startknoten das Netzwerk im Broadcast-Verfahren mit Anfragenachrichten flutet, in denen Dienstgütemerkmale enthalten, die wenigstens eine Korrelationsgröße enthalten, die eine Abstandskorrelation der von den Anfragenachrichten zurückgelegten Netzwerkpfade zu einer Referenzroute im Netzwerk beschreiben. Weitere Ansätze sind in den Dokumenten EP 1 564 938 und WO 2007/055689 beschrieben.

Demgegenüber besteht die Aufgabe der vorliegenden Erfindung darin, ein Verfahren zum Aufbau einer schleifenfreien Route in einem reaktiven Ad-hoc-Netzwerk zur Verfügung zu stellen, mit dem das Problem einer möglichen Schleifenbildung infolge eines Puffers von Anfragenachrichten vermieden wird.

Diese Aufgabe wird nach dem Vorschlag der Erfindung durch ein Verfahren und einen Netzknoten zum Aufbau einer schleifenfreien Route in einem reaktiven Ad-hoc-Netzwerk mit den Merkmalen der unabhängigen Patentansprüche gelöst. Vorteilhafte Ausgestaltungen der Erfindung sind durch die Merkmale der Unteransprüche angegeben.

Es werden zunächst Begriffe definiert, die im Zusammenhang mit der Beschreibung ein bestimmtes Verständnis haben.

Begriff: "Verbindung"

Eine Verbindung in einem Netzwerk wird eindeutig bestimmt durch:

    A) ein 2-Tupel aus den jeweiligen Identifikatoren für Start- und Zielknoten oder
    B) ein 3-Tupel aus den jeweiligen Identifikatoren für Startknoten und Zielknoten und Serviceklasse

Die Verwendung eines n-Tupels impliziert, dass jedes Element des Tupels einen eindeutigen Platz hat. Das heißt, in einem 2-Tupel gemäß A) wäre eine Verbindung R1 = (X, Y) nicht identisch zu einer Verbindung R2 = (Y, X). Eine Route ist eine datentechnische Ende-zu-Ende Verbindung zwischen zwei Netzknoten. Ein Datenlink verbindet zwei benachbarte Netzknoten datentechnisch miteinander.

Begriff: "Qualitätsmerkmal"

Ein Qualitätsmerkmal (Dienstgütemerkmal) ist eine Eigenschaft anhand der die Güte eines Datenlinks oder Route beurteilt werden kann. Beispiele für Qualitätsmerkmale sind die minimale reservierte Bandbreite, tolerierter Jitter, Queue-Länge für einen Ausgangspuffer eines Netzknotens oder die Routenlänge. Ein Dienstgütemerkmal kann durch eine Maßzahl beschrieben werden, beispielsweise die Anzahl der Hops einer Route.

Begriff: "Aggregation"

Mit Aggregation ist die Anwendung einer Aggregationsfunktion gemeint, die Maßzahlen eines selben Qualitätsmerkmals für wenigstens zwei Netzknoten miteinander kombiniert.

Begriff: "Bewertung"

Mit Bewertung ist die Anwendung einer Bewertungsfunktion gemeint, die mehrere Qualitätsmerkmale miteinander kombiniert, wobei die jeweiligen Qualitätsmerkmale gemäß ihrer Bedeutung gewichtet werden können. Beispielsweise können die Qualitätsmerkmale Pfadlänge 5, Verfügbarkeit 70% und Korrelation 4 wie folgt bewertet werden: 0,2*5+10*70/100+0,5*4=10. Die Bewertungsfunktion liefert als Ergebnis einen Bewertungswert. Eine Bewertungsfunktion aggregiert verschiedene Qualitätsmerkmale.

Erfindungsgemäß ist ein Verfahren zum Aufbau einer Route in einem vermaschten vebindungsorientierten paketvermittelten Ad-hoc-Netzwerk (reaktives Multi-hop-Netzwerk) aus datentechnisch miteinander verbundenen Netzknoten gezeigt.

Die aufzubauende Route soll einen Startknoten über wenigstens einen Zwischenknoten mit einem Zielknoten datentechnisch miteinander verbinden (Ende-zu-Ende-Verbindung).

In dem erfindungsgemäßen Verfahren wird das Netzwerk zunächst mit einer vom Startknoten gesendeten Anfragenachricht im Broadcast-Verfahren geflutet. Der Startknoten generiert zu diesem Zweck für jeden benachbarten Netzknoten eine jeweilige Anfragenachricht und sendet den benachbarten Netzknoten diese Anfragenachrichten. In jeder Anfragenachricht ist eine Datenspeicherstruktur zur Speicherung von Maßzahlen für Dienstgütemerkmale enthalten, mit Ausnahme einer Korrelationskenngröße, die eine Abstandskorrelation des von einer jeweiligen Anfragenachricht zurückgelegten Netzwerkpfads zu einer Referenzroute im Netzwerk beschreibt. In den vom Startknoten gesendeten Anfragenachrichten sind entweder Initialisierungswerte für die Maßzahlen der Dienstgütemerkmale oder den Startknoten betreffende Maßzahlen enthalten. Jeder eine solche Anfragenachricht verarbeitende (sendende und/oder empfangende) Netzknoten aktualisiert die in der Anfragenachricht insbesondere in aggregierter Form enthaltenen Maßzahlen. Dies bedeutet, dass der Startknoten und jeder eine Anfragenachricht empfangende Netzknoten mit Ausnahme des Zielknotens oder alternativ die eine Anfragenachricht empfangenden Netzknoten und der Zielknoten die in der Anfragenachricht enthaltenen Maßzahlen aktualisieren. Wesentlich hierbei ist lediglich, dass eine der beiden Alternativen im erfindungsgemäßen Verfahren konsequent beibehalten wird.

Jeder eine Anfragenachricht empfangende, vom Zielknoten verschiedene Netzknoten puffert (unter der Voraussetzung dass unten stehende Bedingung erfüllt ist) während einer voreinstellbaren ersten Ablaufzeit ($T_1$) und während einer nach der ersten Ablaufzeit endenden voreinstellbaren zweiten Ablaufzeit ($T_2$) empfangene Anfragenachrichten in einem Anfragenachrichtenpufferspeicher. Zu diesem Zweck startet der Netzknoten bei erstmaligem Empfang einer Anfragenachricht einen ersten Zeitgeber mit einer ersten Ablaufzeit und einen zweiten Zeitgeber mit einer zweiten Ablaufzeit.

Eine Pufferung einer empfangenen Anfragenachricht erfolgt unter der Voraussetzung, dass eine Bewertung der Maßzahlen der empfangenen Anfragenachricht mittels einer Bewertungsregel ergibt, dass mindestens eine Maßzahl der empfangenen Anfragenachricht besser (bewertet) ist als die entsprechende Maßzahl einer jeden bereits gepufferten Anfragenachricht. Die empfangene Anfragenachricht wird nicht gepuffert, falls eine Bewertung der Maßzahlen der empfangenen Anfragenachricht mittels der Bewertungsregel ergibt, dass alle Maßzahlen der empfangenen Anfragenachricht jeweils nicht besser (bewertet) sind als die entsprechenden Maßzahlen wenigstens einer bereits gepufferten Anfragenachricht. Die Bewertung der Maßzahlen der empfangenen Anfragenachricht erfolgt in einem Einzelvergleich mit jeder gepufferten Anfragenachricht.

Beispielsweise kann die Bewertungsregel für die Maßzahlen eines Dienstgütemerkmals so ausgeführt sein, dass eine Maßzahl besser bewertet wird als eine andere Maßzahl, falls die eine Maßzahl größer (bzw. nicht kleiner) als die andere Maßzahl ist, wobei die eine Maßzahl schlechter bewertet wird als die andere Maßzahl, falls die eine Maßzahl nicht größer (bzw. kleiner) ist als die andere Maßzahl.

Alternativ kann die Bewertungsregel für die Maßzahlen eines Dienstgütemerkmals so ausgeführt werden, dass eine Maßzahl besser bewertet wird als eine andere Maßzahl, falls die eine Maßzahl kleiner (bzw. nicht größer) als die andere Maßzahl ist, wobei die eine Maßzahl schlechter bewertet wird als die andere Maßzahl, falls die eine Maßzahl nicht kleiner (bzw. größer) ist als die andere Maßzahl.

Jeder vom Zielknoten verschiedene Netzknoten wendet auf die Maßzahlen der Dienstgütemerkmale einer jeden gepufferten Anfragenachricht eine erste Bewertungsfunktion zur gewichteten Bewertung von Maßzahlen für Dienstgütemerkmale an, wodurch für jede Anfragenachricht ein erstes Bewertungsergebnis erhalten wird.

Jeder vom Zielknoten verschiedene Netzknoten wählt aus den während der ersten Ablaufzeit gepufferten Anfragenachrichten eine Anfragenachricht gemäß einer ersten Auswahlregel für die ersten Bewertungsergebnisse aus, welche mit jeweils aktualisierten Maßzahlen im Broadcast-Verfahren an die benachbarten Netzknoten ausgesendet wird. Beispielsweise wird durch die erste Auswahlregel eine Anfragenachricht auf Basis einer Abstandskorrelation zu einer Referenzroute des Netzwerks ausgewählt. Insbesondere wird eine Anfragenachricht mit einem besten (beispielsweise höchsten oder niedrigsten) Bewertungsergebnis ausgewählt.

Falls der Zielknoten eine Anfragenachricht erstmalig empfängt, speichert dieser die Anfragenachricht und startet einen dritten Zeitgeber mit einer voreinstellbaren dritten Ablaufzeit ($T_3$). Während der dritten Ablaufzeit empfangene Anfragenachrichten werden im Anfragenachrichtenpufferspeicher des Zielknotens gepuffert.

Der Zielknoten wendet auf die Maßzahlen der Dienstgütemerkmale der gepufferten Anfragenachrichten jeweils eine zweite Bewertungsfunktion zur gewichteten Bewertung von Maßzahlen für Dienstgütemerkmale an, wodurch für jede gepufferte Anfragenachricht ein zweites Bewertungsergebnis erhalten wird, und wählt nach Ablauf der dritten Ablaufzeit wenigstens eine Anfragenachricht gemäß einer zweiten Auswahlregel für die zweiten Bewertungsergebnisse aus. Beispielsweise wird durch die zweite Auswahlregel eine Anfragenachricht auf Basis einer Abstandskorrelation zu einer Referenzroute des Netzwerks ausgewählt. Insbesondere wird eine Anfragenachricht mit einem besten (beispielsweise höchsten oder niedrigsten) Bewertungsergebnis ausgewählt.

Der Zielknoten generiert anschließend eine Antwortnachricht und sendet die Antwortnachricht (RREP) an einen benachbarten Netzknoten in Rückwärtsrichtung entsprechend des von der ausgewählten Anfragenachricht zurückgelegten Netzwerkpfads. Die Antwortnachricht wird von diesem und weiteren Netzknoten bis zum Startknoten entsprechend weitergeleitet. In der Antwortnachricht können die Maßzahlen der Dienstgütemerkmale der ausgewählten Anfragenachricht enthalten sein.

Jeder die Antwortnachricht empfangende Netzknoten prüft, ob eine während der zweiten Ablaufzeit gepufferte Anfragenachricht gemäß der ersten Auswahlregel ein besseres Bewertungsergebnis hat als die nach Ablauf der ersten Ablaufzeit gesendete Anfragenachricht, wobei er für den einen Fall, dass im Netzknoten keine besser bewertete Anfragenachricht vorhanden ist, die Antwortnachricht in Rückwärtsrichtung entlang des zurückgelegten Netzwerkpfads der vom Zielknoten ausgewählten Anfragenachricht an den nächsten Netzknoten weiterleitet, und für den anderen Fall, dass im Netzknoten eine besser bewertete Anfragenachricht vorhanden ist, die Antwortnachricht in Rückwärtsrichtung entlang des von der besser bewerteten Anfragenachricht zurückgelegten Netzwerkpfads an den nächsten Netzknoten weiterleitet.

Empfängt der Startknoten die Antwortnachricht, wird hierdurch der von der Antwortnachricht zurückgelegte Netzwerkpfad als Route eingerichtet. Gegebenenfalls kann der Startknoten zu diesem Zweck zusätzlich eine Bestätigungsnachricht über den von der Antwortnachricht zurückgelegten Netzwerkpfad an den Zielknoten senden. Alternativ kann auch durch ein erstes Nutzdatenpaket (welches von einer im Rahmen des Netzwerkprotokolls versendeten Routing-Nachricht verschieden ist) die Route bestätigt werden. Dies ist sinnvoll, da ein Nutzdatenpaket die Bestätigungsnachricht überholen oder eine Bestätigungsnachricht verloren gehen kann.

In dem erfindungsgemäßen Verfahren kann durch eine bedingte Pufferung von Anfragenachrichten in den Netzknoten eine schleifenfreie Route in einem reaktiven Ad-hoc-Netzwerk eingerichtet werden.

Im erfindungsgemäßen Verfahren sind die Maßzahlen für Dienstgütemerkmale vorzugsweise in aggregierter Form in den Anfrage- bzw. Antwortnachrichten enthalten und werden von den Netzknoten mit aggregierten Maßahlen aktualisiert.

Das erfindungsgemäße Verfahren kann so ausgestaltet sein, dass ein eine Anfragenachricht verarbeitender Netzknoten eine in der Anfragenachricht enthaltene Maßzahl eines Dienstgütemerkmals aktualisiert, indem er eine Aggregationsfunktion auf die in der Anfragenachricht enthaltene Maßzahl und eine diesen Netzknoten betreffende Maßzahl desselben Dienstgütemerkmals anwendet. Ein Netzknoten kann eine in der Anfragenachricht enthaltene Maßzahl eines Dienstgütemerkmals aktualisieren, indem er eine Aggregationsfunktion auf die in der Anfragenachricht gespeicherte Maßzahl und eine für den Datenlink eines nächsten Hops der Anfragenachricht geltende Maßzahl desselben Dienstgütemerkmals anwendet. Alternativ kann der Netzknoten eine in der Anfragenachricht enthaltene Maßzahl eines Dienstgütemerkmals aktualisieren, indem er eine Aggregationsfunktion auf die in der Anfragenachricht gespeicherte Maßzahl und eine für den Datenlink eines unmittelbar vorhergehenden Hops der Anfragenachricht geltende Maßzahl desselben Dienstgütemerkmals anwendet. Wesentlich hierbei ist lediglich, dass eine der beiden Alternativen im erfindungsgemäßen Verfahren konsequent beibehalten wird.

In dem erfindungsgemäßen Verfahren kann jeder vom Zielknoten verschiedene Netzknoten zunächst die Maßzahlen der Dienstgütemerkmale aktualisieren und anschließend die erste Bewertungsfunktion zur gewichteten Bewertung von Maßzahlen für Dienstgütemerkmale auf die aktualisierten Maßzahlen anwenden. Alternativ kann er zunächst die erste Bewertungsfunktion zur gewichteten Bewertung von Maßzahlen für Dienstgütemerkmale auf die gespeicherten Maßzahlen anwenden und anschließend die Maßzahlen der Dienstgütemerkmale aktualisieren. Wesentlich hierbei ist lediglich, dass eine der beiden Alternativen im Verfahren konsequent beibehalten wird.

In dem erfindungsgemäßen Verfahren kann der Zielknoten zunächst die Maßzahlen der Dienstgütemerkmale aktualisieren und anschließend die zweite Bewertungsfunktion zur gewichteten Bewertung von Maßzahlen für Dienstgütemerkmale auf die aktualisierten Maßzahlen anwenden. Alternativ kann er zunächst die zweite Bewertungsfunktion zur gewichteten Bewertung von Maßzahlen für Dienstgütemerkmale auf die gespeicherten Maßzahlen anwenden und anschließend die Maßzahlen der Dienstgütemerkmale aktualisieren. Wesentlich hierbei ist lediglich, dass eine der beiden Alternativen im Verfahren konsequent beibehalten wird.

Bei einer weiteren vorteilhaften Ausgestaltung des erfindungsgemäßen Verfahrens wählt der Zielknoten nach Ablauf der dritten Ablaufzeit eine Mehrzahl Anfragenachrichten gemäß einer dritten Auswahlregel für die zweiten Bewertungsergebnisse aus und sendet jeweils eine mit den zugehörigen Dienstgütemerkmalen der ausgewählten Anfragenachrichten versehene Antwortnachricht (RREP) an die benachbarten Netzknoten in Rückwärtsrichtung entsprechend der von den ausgewählten Anfragenachrichten zurückgelegten Netzwerkpfade. Gemäß der dritten Auswahlregel werden die Antwortnachrichten beispielsweise auf Basis einer Abstandskorrelation zu einer Referenzroute gewählt. Insbesondere können die Anfragenachrichten, beginnend mit der Anfragenachricht mit einem besten (beispielsweise höchstes oder niedrigstes Bewertungsergebnis) Bewertungsergebnis, mit einem sukzessiv schlechteren Bewertungsergebnis ausgewählt werden.

Jeder eine Antwortnachricht empfangende Netzknoten aktualisiert die aggregierten Maßzahlen der Antwortnachricht und prüft, ob eine nach Ablauf der ersten Ablaufzeit gepufferte Anfragenachricht gemäß der ersten Auswahlregel ein besseres Bewertungsergebnis hat als die nach Ablauf der ersten Ablaufzeit gesendete Anfragenachricht. Für den Fall, dass im Netzknoten keine besser bewertete Anfragenachricht vorhanden ist, wird die Antwortnachricht in Rückwärtsrichtung entlang des zurückgelegten Netzwerkpfads der vom Zielknoten ausgewählten Anfragenachricht an den nächsten Netzknoten weitergeleitet. Für den anderen Fall, dass im Netzknoten eine besser bewertete Anfragenachricht vorhanden ist, wird die Antwortnachricht in Rückwärtsrichtung entlang des von der besser bewerteten Anfragenachricht zurückgelegten Netzwerkpfads an den nächsten Netzknoten weitergeleitet.

In diesem Fall startet der Startknoten nach erstmaligem Empfang einer Antwortnachricht einen vierten Zeitgeber mit einer voreinstellbaren vierten Ablaufzeit und puffert während der vierten Ablaufzeit empfangene Antwortnachrichten. Zudem wendet der Startknoten eine dritte Bewertungsfunktion zur gewichteten Bewertung von Dienstgütemerkmalen auf die Maßzahlen für Dienstgütemerkmale der gepufferten Antwortnachrichten an, wodurch für jede Antwortnachricht ein drittes Bewertungsergebnis erhalten wird. Nach Ablauf der vierten Ablaufzeit wählt der Startknoten eine Antwortnachricht gemäß einer vierten Auswahlregel für die dritten Bewertungsergebnisse aus und sendet eine Bestätigungsnachricht in Vorwärtsrichtung über den durch die ausgewählte Antwortnachricht zurückgelegten Netzwerkpfad an den Zielknoten sendet, wodurch die Route eingerichtet wird. Beispielsweise wird durch die vierte Auswahlregel eine Antwortnachricht auf Basis einer Abstandskorrelation zu einer Referenzroute des Netzwerks ausgewählt. Insbesondere wird eine Antwortnachricht mit einem besten (beispielsweise höchsten oder niedrigsten) Bewertungsergebnis ausgewählt.

In dem erfindungsgemäßen Verfahren können die erste, zweite und dritte Bewertungsfunktion zueinander gleich sein.

Die Erfindung erstreckt sich weiterhin auf ein Netzknoten eines Netzwerks aus datentechnisch miteinander verbundenen Netzknoten, welcher zur Durchführung eines wie oben beschriebenen Verfahrens geeignet eingerichtet ist.

Die Erfindung wird nun anhand eines Ausführungsbeispiels näher erläutert, wobei Bezug auf die beigefügten Figuren genommen wird.

Fig. 1    veranschaulicht in einer schematischen Darstellung ein Ausführungsbeispiel der Erfindung;

Fig. 2    veranschaulicht in einer weiteren schematischen Darstellung das Ausführungsbeispiel der Erfindung.

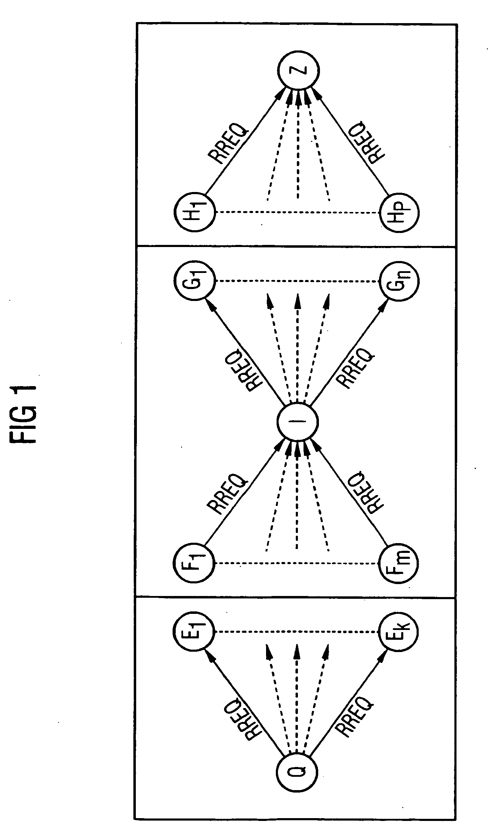

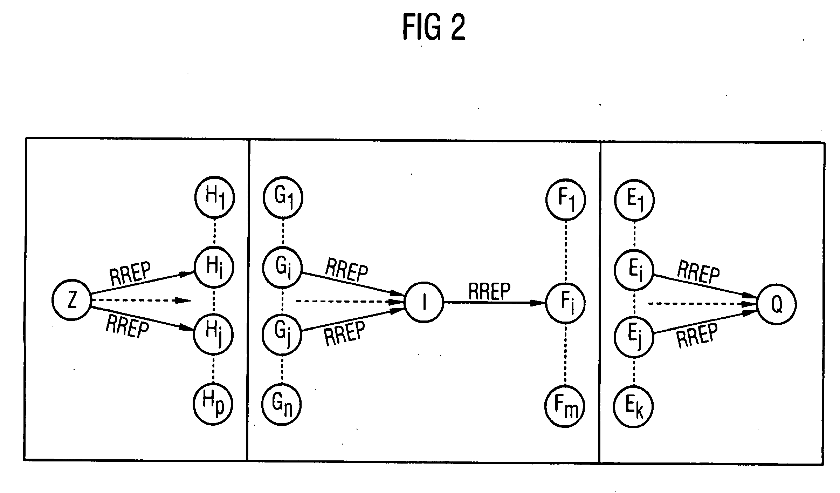

In den Figuren 1 und 2 ist ein drahtloses vermaschtes verbindungsorientiertes paketvermitteltes Ad-hoc-Netzwerk (reaktives Multi-hop-Netzwerk) mit einer Mehrzahl über Punkt-zu-Punkt-Datenlinks datentechnisch miteinander verbundener Netzknoten gezeigt. Die Netzknoten, welche jeweils durch indizierte Buchstaben bezeichnet sind, sind mit zur Datenverarbeitung geeigneten Prozessiereinrichtungen sowie mit Sendeund Empfangseinrichtungen zum Senden bzw. Empfangen von Datenpaketen versehen. In den Netzknoten ist dezentral ein Netzwerkmanagement implementiert, welches das erfindungsgemäße Verfahren ausführt.

An einer Übertragung von Datenpaketen zwischen zwei durch einen Punkt-zu-Punkt Datenlink miteinander verbundene Netzknoten im Netzwerk sind mehrere Schichten gemäß dem ISO/OSI-Referenzmodell beteiligt. Diese enthalten insbesondere eine Bitübertragungsschicht L1 (Physical Layer), in der die bitweise Übertragung der Daten über das Übertragungsmedium bewerkstelligt wird, eine Sicherungsschicht L2 (Data Link), in der beispielsweise der Zugriff auf das Übertragungsmedium geregelt ist, und welche in zwei Unterschichten (LLC = Logical Link Control und Medienzugriffsschicht MAC = Media Access Control) unterteilt ist, und eine Vermittlungsschicht L3 (Network layer) L3, in der das Routing und eine Weiterleitung von Datenpaketen erfolgt.

Im Netzwerk des Ausführungsbeispiels von Fig. 1 und Fig. 2 erfolgt eine Übertragung von Datenpaketen auf Basis eines Zeitmultiplexzugriffsverfahrens (TDMA = Time Division Multiple Access) mit Bandbreitenreservierung, wie es im Standard IEEE 802.16 spezifiziert ist. Hierbei sind bestimmte Zeitabschnitte (Zeitschlitze) jeweils gleicher Länge mit einer reservierten Bandbreite für eine Datenübertragung vorgesehen. IEEE 802.16 spezifiziert hierbei lediglich die beiden untersten Schichten L1 und L2, wobei durch die MAC-Schicht die verfügbaren Zeitschlitze auf die verschiedenen Netzknoten, die jeweils mit einem selben Netzknoten über einen separaten Datenlink verbunden sind, verteilt werden.

Im Rahmen von IEEE 802.16 werden in der MAC-Schicht folgende Dienstgütemerkmale für einen Datenlink berücksichtigt:

-    die Anzahl verfügbarer Zeitschlitze (Minislots) für eine Übertragung in beiden Übertragungsrichtungen des Datenlinks, wobei in diesen Zeitschlitzen ein Netzknoten Datenpakete ohne Beeinträchtigung durch einen anderen Netzknoten senden und empfangen kann,
-    die Anzahl verfügbarer Zeitschlitze (Minislots) für eine Übertragung nur in der Empfangsrichtung des Datenlinks, wobei in diesen Zeitschlitzen ein Netzknoten Datenpakete ohne Beeinträchtigung durch einen anderen Netzknoten nur empfangen kann,
-    die Anzahl verfügbarer Zeitschlitze (Minislots) für eine Übertragung nur in der Senderichtung des Datenlinks, wobei in diesen Zeitschlitzen ein Netzknoten Datenpakete ohne Beeinträchtigung durch einen anderen Netzknoten nur senden kann,
-    die Anzahl verfügbarer Zeitschlitze (Minislots) für eine Übertragung über den Datenlink, bei der weder in Empfangsrichtung noch in Senderichtung Datenpakete ohne Beeinträchtigung durch einen anderen Netzknoten empfangen bzw. gesendet werden können,
-    eine Bandbreiteninformation, das heißt, die Anzahl der Zeitschlitze (Minislots), die für den nächsten Hop im Netzwerkpfad reserviert sind,
-    eine Queue-Länge für den Ausgangspuffer des für den nächsten Hop vorgesehenen Datenlinks.

Auf Basis einer Verbindungsanfrage (Anfrage nach einer Route von einem Startknoten Q zu einem Zielknoten Z) wird eine Folge von Prozessschritten zum Einrichten einer Route im Netzwerk gestartet, welche hier in ihrer Gesamtheit mit dem Begriff "Route Discovery" (Routenfindung) bezeichnet wird. Eine selbe Route Discovery ist durch die Adressen von Start- und Zielknoten, eine Serviceklasse (Klasse von Dienstgütemerkmalen) und eine Routennummer eindeutig identifizierbar.

Die aufzubauende Route soll eine bestimmte Dienstgüte (bzw. bestimmte Dienstgütemerkmale) aufweisen. Beispielsweise soll sie insbesondere einen Abstand von mehr als 3 Hops zu einer bereits im Netzwerk existierenden Parallelroute (Referenzroute) haben. Es wird angenommen, dass eine solche Parallelroute bereits im Netzwerk existiert. Sie kann beispielsweise durch eine frühere Route Discovery des erfindungsgemäßen Verfahrens aufgebaut worden sein.

Zum Aufbau der Route generiert der Startknoten Q zunächst eine Anfragenachricht RREQ (RREQ = Route Request), die im Broadcast-Verfahren an alle nächsten Nachbarn des Startknotens Q gesendet wird. Dies ist in Fig. 1 linke Darstellung, worin der Startknoten Q und die nächsten Nachbarn $E_1...E_k$ des Startknotens Q gezeigt sind, anhand von Pfeilen, welche das Aussenden der Anfragenachricht RREQ an jeden nächsten Nachbarknoten symbolisieren, schematisch veranschaulicht.

Die Anfragenachricht RREQ weist beispielsweise folgendes Format auf:

| Feld | Größe |
|---|---|
| Nachrichtentyp | 4 Bit |
| Quelladresse | 32 Bit |
| Zieladresse | 32 Bit |
| Serviceklasse | 8 Bit |
| Routennummer | 8 Bit |
| Route Request Nummer | 16 Bit |
| | |
| Dienstgüteinformationen: | |
| Korrelationsfaktor | 16 Bit |
| Qualifizierte Queue-Länge | 16 Bit |
| Minimale reservierte Bandbreite | 8 Bit |
| Minimale freie Bandbreite | 8 Bit |
| Länge der Route | 8 Bit |

Demnach ist in der Anfragenachricht RREQ ein Identifikator für den Nachrichtentyp (im vorliegenden Fall "Anfragenachricht"), ein Identifikator des Startknotens, ein Identifikator des Zielknotens, ein Identifikator für eine Serviceklasse (Klasse von Dienstgütemerkmalen), eine Routennummer zur Identifikation der aufzubauenden Route und eine Route Request Nummer zur Identifikation der Anfragenachricht RREQ enthalten.

Zusätzlich ist in der Anfragenachricht eine Datenspeicherstruktur enthalten, in der Maßzahlen (Metriken) für eine Reihe von Dienstgütemerkmalen gespeichert werden können, nämlich für einen Korrelationsfaktor, der die Abstandskorrelation der aufzubauenden Route zu der bereits im Netzwerk existierenden Parallelroute angibt, eine qualifizierte Queue-Länge für den Ausgangspuffer eines Netzknotens, eine für die Datenübertragung reservierte minimale Bandbreite, eine minimale freie Bandbreite und die Länge der Route.

Die Maßzahlen der Dienstgütemerkmale der Anfragenachrichten werden von den Netzkoten jeweils aktualisiert. Der Startknoten ermittelt die für ihn zutreffenden Werte der Maßzahlen für die Dienstgütemerkmale und speichert diese in den Datenspeicherstrukturen der an seine Nachbarknoten gesendeten Anfragenachrichten.

Wenn ein Netzknoten des Netzwerks eine Anfragenachricht RREQ einer selben Route Discovery zum ersten Mal empfängt, startet er einen ersten Zeitgeber (Timer) mit einer voreinstellbaren ersten Ablaufzeit $T_1$ sowie einen zweiten Timer mit einer voreinstellbaren zweiten Ablaufzeit $T_2$. Startzeit und Länge der beiden Ablaufzeiten sind so gewählt, dass die zweite Ablaufzeit $T_2$ erst nach der ersten Ablaufzeit $T_1$ abläuft.

Während des Ablaufs der ersten Ablaufzeit $T_1$ und während des Ablaufs der zweiten Ablaufzeit $T_2$ werden alle an diesem Netzknoten ankommenden Anfragenachrichten RREQ, die zur selben Route Discovery gehören, im Anfragenachrichtenpufferspeicher zwischengespeichert (gepuffert), falls die folgende Bedingung erfüllt ist:

Die empfangene Anfragenachricht wird einem jeweiligen Einzelvergleich mit bereits gepufferten Anfragenachrichten unterzogen. Hierbei wird für jedes Dienstgütemerkmal der empfangenen Anfragenachricht anhand einer wählbaren Bewertungsregel geprüft, ob dieses Dienstgütemerkmal besser oder schlechter ist als das entsprechende Dienstgütemerkmal einer selben gepufferten Anfragenachricht. Für den Fall, dass mindestens eine Maßzahl der empfangenen Anfragenachricht besser bewertet wird als die entsprechende Maßzahl einer jeden der gespeicherten Anfragenachrichten wird die empfangene Anfragenachricht gepuffert. Für den Fall, dass alle Maßzahlen der empfangenen Anfragenachricht nicht besser bewertet werden als die entsprechenden Maßzahlen wenigstens einer gespeicherten Anfragenachricht wird die empfangene Anfragenachricht nicht gepuffert.

Die Bewertungsregel ist beispielsweise so gewählt, dass eine erste Maßzahl besser als eine zweite Maßzahl bewertet wird, falls die erste Maßzahl größer als die gespeicherte Maßzahl ist, und dass eine erste Maßzahl schlechter als eine zweite Maßzahl bewertet wird, falls die erste Maßzahl nicht größer als die gespeicherte Maßzahl ist. Dies gilt für die Dienstgütemerkmale temerkmale minimale reservierte Bandbreite, minimale freie Bandbreite und Korrelationsfaktor.

Alternativ kann die Bewertungsregel so gewählt sein, dass eine erste Maßzahl besser als eine zweite Maßzahl bewertet wird, falls die erste Maßzahl kleiner als die gespeicherte Maßzahl ist, und dass eine erste Maßzahl schlechter als eine zweite Maßzahl bewertet wird, falls die erste Maßzahl nicht kleiner als die gespeicherte Maßzahl ist. Dies gilt für die Dienstgütemerkmale qualifiziert Queue-Länge und Länge der Route.

Durch diese Maßnahme kann eine schleifenfreie Route realisiert werden.

Ein Algorithmus zur Prüfung ob sich eine Anfragenachricht auf einer Schleife befindet oder nicht ist beispiels-

weise wie folgt:

```
function isNOtONALoop(r)
    for all i ε Q do  // Q ist der Satz zu prüfen-
der/weitergeleiteter RREQs
        if p₁(i) ≤ p₁(r) Λ … Λ pₙ(i) ≤ pₙ(r) then //pₓ(y)
ist ein Dienstgütemerkmal
            return false
        end if
    end for
    return true
end function
```

Die ursprüngliche Anfragenachricht RREQ, von welcher die wiederholt empfangene Anfragenachricht RREQ abstammt, befindet sich stets im Anfragenachrichtenpufferspeicher. Aus diesem Grund liegt mindestens eine Anfragenachricht RREQ im Anfragenachrichtenpufferspeicher vor, die aufgrund der Monotonie in allen Qualitätsmerkmalen nicht schlechter ist, als die wiederholt empfangene Anfragenachricht RREQ. Eine auf einer Schleife befindliche Anfragenachricht RREQ wird somit in jedem Fall erkannt.

Somit werden auch nach Ablauf der ersten Ablaufzeit $T_1$ bis zum Ablauf der zweiten Ablaufzeit $T_2$ alle ankommenden Anfragenachrichten RREQ, die zur selben Route Discovery gehören, im Anfragenachrichtenpufferspeicher zwischengespeichert, falls obige Bedingung erfüllt ist.

Nach Ablauf der ersten Ablaufzeit $T_1$ wird vom Netzknoten aus allen während der ersten Ablaufzeit $T_1$ im Anfragenachrichtenpufferspeicher gespeicherten Anfragenachrichten RREQ eine Anfragenachricht ausgewählt. Eine Auswahl erfolgt auf Basis der in den Anfragenachrichten RREQ gespeicherten Qualitätsmerkmale.

Im Netzknoten wird zu diesem Zweck für jede gepufferte Anfragenachricht eine erste Bewertungsfunktion zur gewichteten Bewertung der Maßzahlen der in den gepufferten Anfragenachrichten gespeicherten Dienstgütemerkmale ausgeführt. Als Ergebnis gibt die Bewertungsfunktion einen Bewertungswert für jede Anfragenachricht aus. Die Auswahl einer Anfragenachricht aus den im Netzknoten gepufferten Anfragenachrichten erfolgt gemäß einer wählbaren ersten Auswahlregel für die Ergebnisse der Bewertungsfunktion, wobei eine Anfragenachricht auf Basis des aggregierten Korrelationsfaktors gewählt wird, was vorteilhaft in Hinblick auf lokale Störungen (Interferenzen) durch Netzknoten ist.

Jeder Netzknoten ermittelt für die ausgewählte Anfragenachricht die ihn betreffenden Maßzahlen der in der Anfragenachricht enthaltenen Dienstgütemerkmale. Hier sind die den Netzknoten selbst betreffenden Maßzahlen beispielsweise die Maßzahlen der Dienstgütemerkmale für jenen Datenlink, über den die jeweilige Anfragenachricht weitergeleitet werden soll (nächster Hop).

Zur Ermittlung der ihn betreffenden Maßzahlen der Dienstgütemerkmale kann der Netzknoten auf die in der MAC-Schicht berücksichtigten Dienstgüteinformationen zurückgreifen, die zwischen den Schichten (Cross-Layer) über jeweilige Interfaces im Push- oder Pull-Verfahren beispielsweise mittels regelmäßiger Informationsnachrichten ausgetauscht werden können.

So kann der Netzknoten aus der Anzahl reservierter Zeitschlitze für den nächsten Hop des Datenpakets die minimale reservierte Bandbreite ermitteln. Aus der Queue-Länge für den Ausgangspuffer berechnet der Netznoten als Maßzahl eine so genannte qualifizierte Queue-Länge für den nächsten Hop entlang des Netzwerkpfads, wobei als qualifizierte Queue-Länge beispielsweise der Quotient aus der Queue-Länge und der gewichteten Summe aus reservierter Bandbreite und verfügbarer Bandbreite berechnet wird. Alternativ hierzu kann auch folgende Formel zur Berechnung einer qualifizierten Queue-Länge L eingesetzt werden.

Mit den Abkürzungen:

A: Queue-Länge des Ausgangspuffers für den nächsten Hop
B: Anzahl der Minislots für beide Übertragungsrichtungen
C: Anzahl der Minislots für Senderichtung
D: Anzahl der Minislots für Empfangsrichtung
E: Anzahl der für den nächsten Hop reservierten Minislots
F: willkürliche Konstante größer Null

ergibt sich die qualifizierte Queue-Länge (L) zu:

$$L=A/(a \cdot B+b \cdot C+c \cdot D+d \cdot E+F).$$

Zudem berechnet jeder Netzknoten die Routenlänge, welche der Anzahl Hops des zurückgelegten Netzwerkpfads entspricht, und die Abstandskorrelation zur Referenzroute, die den Abstand zwischen diesen beiden Netzwerkpfaden beschreibt. Der Abstand von zwei Routen ergibt sich aus der Summe der Abstände jedes Knotens der ersten Route zum nächsten Knoten der zweiten Route. In diesem Zusammenhang wird als Abstand zweier Knoten die niedrigste Anzahl von Hops zwischen den beiden Netzknoten angesehen.

Um dem Netzknoten eine Bestimmung der Abstandskorrelation zur Referenzroute zu ermöglichen, tauschen in dem erfindungsgemäßen Verfahren alle Netzknoten mittels Routeninformationsnachrichten Informationen über Routen in der Nachbarschaft eines Netzknotens aus. Dies erfolgt in der Weise, dass jeder Netzknoten allen nächsten Nachbarknoten durch Übermittlung der Routeninformationsnachricht mitteilt, welche Routen ihn als Netzknoten enthalten und welche Routen über Netzknoten in seiner 1-Hop-, 2-Hop- und 3-Hop-Nachbarschaft gehen.

Im Weiteren ist ein beispielhafter Algorithmus zur Bestimmung der Korrelation anhand von Nachbarschaftsinformationen angegeben:

**function** CORRELATION(*srcAddr, dstAddr, serviceClass, routeNumber*)

*correlationFactor* ← 0

**for all** i ε <Routen auf lokalem Knoten> **do**

    **if** *is Parallel(srcAddr, dstAddrm, serviceClass)* **then**

        *correlationFactor* ← *correlationFactor* + 12

    **end if**

  **end for**

**for all** i ε <Routen auf direkten Nachbarn> **do**

    **if** *is Parallel(srcAddr, dstAddrm, serviceClass)* **then**

        *correlationFactor* ← *correlationFactor* + 3

    **end if**

  **end for**

**for all** i ε <Routen mit einem Abstand von drei Kanten> **do**

    **if** *is Parallel(srcAddr, dstAddrm, serviceClass)* **then**

        *correlationFactor* ← *correlationFactor* + 3

    **end if**

  **end for**

**for all** i ε <Routen mit einem Abstand von vier Kanten> **do**

    **if** *is Parallel(srcAddr, dstAddrm, serviceClass)* **then**

$$correlationFactor \leftarrow correlationFactor + 1$$

**end if**

**end for**

**return** *correlationFactor*

**end function**

Auf Basis der ermittelten Maßzahlen, die den Netzknoten selbst betreffen, berechnet jeder Netzknoten anschließend für die ausgewählte Anfragenachricht eine aktuelle Maßzahl für die in der Anfragenachricht enthaltenen Dienstgütemerkmale.

Zu diesem Zweck führt der Netzknoten jeweils separat für jedes Dienstgütemerkmal eine Aggregationsfunktion aus. Die Aggregationsfunktion für ein Dienstgütemerkmal wird hierbei auf die in der Anfragenachricht gespeicherte Maßzahl des Dienstgütemerkmals und die ermittelte Maßzahl dieses Dienstgütemerkmals angewendet. Die Anwendung der Aggregationsfunktion liefert für jedes Dienstgütemerkmal als Ergebniswert eine für diesen Netzknoten aktuelle Maßzahl für das Dienstgütemerkmal. Für die reservierte Bandbreite und die minimale freie Bandbreite wird als Aggregationsfunktion jeweils eine Minimumsfunktion ausgeführt, welche als Ergebniswert (aktuelle Maßzahl) das Minimum der beiden Maßzahlen zurückgibt. Für die Queue-Länge, die Länge der Route und den Korrelationsfaktor wird als Aggregationsfunktion jeweils eine Plusfunktion ausgeführt, welche als Ergebniswert (aktuelle Maßzahl) die Summe der beiden Maßzahlen zurückgibt.

Anschließend sendet der Netzknoten die ausgewählte Anfragenachricht jeweils an alle seine nächsten Nachbarknoten im Broadcast-Verfahren, wobei in den Anfragenachrichten für jeden Datenlink des nächsten Hops die gespeicherten Maßzahlen durch die aktuellen Maßzahlen ersetzt (aktualisiert) werden.

In Fig. 1 ist dies durch die mittlere Abbildung veranschaulicht. Sie zeigt einen Netzknoten I, der von einer Mehrzahl Netzknoten $F_1...F_m$ jeweils eine Anfragenachricht RREQ erhält, die empfangenen Anfragenachrichten RREQ im Anfragenachrichpuffert, aus diesen eine Anfragenachricht RREQ auswählt, die ausgewählte Anfragenachricht RREQ entsprechend seiner eigenen Routing-relevanten Informationen modifiziert und diese modifizierte Anfragenachricht RREQ an alle unmittelbar benachbarten Netzknoten $G_1...G_n$ im Broadcast-Verfahren sendet.

Jeder Netzknoten speichert die Information, von welchem Netzknoten er eine jeweilige Anfragenachricht RREQ empfangen hat.

Schließlich erhält der Zielknoten Z von seinen benachbarten Netzknoten $H_1...H_p$ jeweils eine Anfragenachricht RREQ, was in Fig. 1, rechte Abbildung, veranschaulicht ist. Mit dem Empfang der ersten Anfragenachricht RREQ einer selben Route Discovery startet der Zielknoten Z einen dritten Timer mit einer voreinstellbaren dritten Ablaufzeit $T_3$. Während des Ablaufs der dritten Ablaufzeit $T_3$ puffert der Zielknoten Z alle empfangenen Anfragenachrichten RREQ in einem Anfragenachrichtenpufferspeicher.

Nach Ablauf der dritten Ablaufzeit $T_3$ wird aus den im Anfragenachrichtenpufferspeicher gespeicherten Anfragenachrichten RREQ eine Mehrzahl Anfragenachrichten RREQ durch den Zielknoten Z ausgewählt. Die Auswahl einer Anfragenachricht RREQ erfolgt auf Basis der als Dienstgüteinformationen in den Anfragenachrichten RREQ gespeicherten Qualitätsmerkmale, wobei die Bewertungsfunktion auf die Maßzahlen der gepufferten Anfragenachrichten angewendet wird.

Die Auswahl der Mehrzahl Anfragenachrichten RREQ erfolgt gemäß einer dritten Auswahlregel für die zweiten Bewertungsergebnisse, wobei beispielsweise Anfragenachrichten ausgewählt werden, die beginnend mit einem maximalen Bewertungsergebnis ein sukzessiv fallendes Bewertungsergebnis haben. Insbesondere können auch Anfragenachrichten auf Basis des Korrelationsfaktors ausgewählt werden.

Anschließend generiert der Zielknoten Z eine Antwortnachricht (RREP = "Route Reply"), die im Unicast-Verfahren jeweils an alle benachbarten Netzknoten, von denen die ausgewählten Anfragenachrichten RREQ empfangen wurden, gesendet wird. Dies ist in Fig. 2, linke Abbildung, veranschaulicht, worin in schematischer Weise dargestellt ist, dass der Zielknoten Z eine Mehrzahl Antwortnachrichten an die unmittelbar benachbarten Netzknoten $H_1...H_p$ sendet.

Das Nachrichtenformat der Antwortnachricht RREP ist hier beispielsweise wie folgt:

| Feld | Größe |
|---|---|
| Nachrichtentyp | 4 Bit |
| Quelladresse | 32 Bit |
| Zieladresse | 32 Bit |
| Serviceklasse | 8 Bit |

(fortgesetzt)

| Feld | Größe |
|---|---|
| Routennummer | 8 Bit |
| Route Request Nummer | 16 Bit |
| | |
| Dienstgüteinformationen: | |
| Korrelationsfaktor | 16 Bit |
| Qualifizierte Queue-Länge | 16 Bit |
| Minimale reservierte Bandbreite | 8 Bit |
| Minimale freie Bandbreite | 8 Bit |
| Länge der Route | 8 Bit |

Demnach ist in der Antwortnachricht RREQ ein Identifikator für den Nachrichtentyp (im vorliegenden Fall "Antwortnachricht"), ein Identifikator des Startknotens, ein Identifikator des Zielknotens, ein Identifikator für eine Serviceklasse, eine Routennummer zur Identifikation der aufzubauenden Route und eine Route Request Nummer zur Identifikation der Antwortnachricht RREQ enthalten.

Zusätzlich ist in der Anfragenachricht eine Datenspeicherstruktur enthalten, in der die Maßzahlen (Metriken) für Dienstgütemerkmale der zugehörigen ausgewählten Antwortnachricht gespeichert sind.

Jeder Netzknoten der eine Antwortnachricht RREP empfängt, aktualisierte die Maßzahlen für die Dienstgütemerkmale und sendet diese Antwortnachricht im Unicast-Verfahren an den nächsten Netzknoten weiter, von dem er die entsprechende Anfragenachricht RREQ erhalten hat. Voraussetzung für eine Weiterleitung einer Antwortnachricht RREP durch einen Zwischenknoten ist, dass die zweite Ablaufzeit $T_2$ der zugehörigen Route Discovery des Netzknotens noch nicht abgelaufen ist. Falls die zugehörige zweite Ablaufzeit $T_2$ der zugehörigen Route Discovery bereits abgelaufen ist, wird die Antwortnachricht RREP nicht weiter verarbeitet.

Die Antwortnachricht RREP wird somit im Unicast-Verfahren in Rückwärtsrichtung entlang der durch die ausgewählten Anfragenachrichten RREQ definierten Netzwerkpfade zum Startknoten Q geleitet.

Da ein Netzkoten bis zum Ablauf der zweiten Ablaufzeit $T_2$, also auch noch nach Aussenden einer Anfragenachricht RREQ ankommende Anfragenachrichten RREQ im Anfragenachrichtenpufferspeicher puffert, kann der Fall eintreten, dass durch eine nach Ablauf der ersten Ablaufzeit $T_1$ empfangene Anfragenachricht RREQ eine besser bewertete Route definiert ist. In diesem Fall leitet der Netzknoten die Antwortnachricht RREP an jenen Vorgängerknoten weiter, von dem er die besser bewertete, gepufferte Anfragenachricht RREQ empfangen hat. Hierdurch besteht die Möglichkeit, nachträgliche Routenverbesserungen zu berücksichtigen. Eine Auswahl der besten Anfragenachricht RREQ erfolgt durch die Anwendung der Bewertungsfunktion und Auswahl gemäß der ersten Auswahlregel für das Bewertungsergebnis.

Dies ist in Fig. 2, mittlere Abbildung, veranschaulicht, welche einen Zwischenknoten I zeigt, der von einer Mehrzahl Zwischenknoten $G_i...G_j$ jeweils eine Antwortnachricht RREP empfängt und diese an einen Netzknoten $F_i$ sendet, von dem er die am besten bewertete Anfragenachricht RREQ empfangen hat.

Wenn der Startknoten Q die erste Antwortnachricht RREP der Route Discovery empfängt, startet er einen vierten Timer mit einer wählbaren vierten Ablaufzeit $T_4$. Während des Ablaufs der vierten Ablaufzeit $T_4$ werden weitere ankommende Antwortnachrichten RREP in einem Antwortnachrichtenpufferspeicher des Startknotens Q zwischengespeichert.

Nach Ablauf der vierten Ablaufzeit $T_4$ wählt der Startknoten Q aus den im Anfragenachrichtenpufferspeicher gespeicherten Anfragenachrichten RREQ eine Anfragenachricht aus. Die Auswahl einer Anfragenachricht RREQ erfolgt auf Basis der als Dienstgüteinformationen in den Anfragenachrichten RREQ gespeicherten Dienstgütemerkmale, wobei hierzu die gleiche Bewertungsfunktion wie bereits in den anderen Netzknoten (einschließlich Zielknoten) angewendet wird, wodurch ein drittes Bewertungsergebnis erhalten wird. Nach Ablauf der vierten Ablaufzeit wählt der Startknoten eine Antwortnachricht gemäß einer vierten Auswahlregel für die dritten Bewertungsergebnisse aus, wobei beispielsweise jene Antwortnachricht mit einem maximalen Bewertungsergebnis gewählt wird. Eine Auswahl kann insbesondere auf Basis des aggregierten Korrelationsfaktors erfolgen. Anschließend generiert der Startknoten eine Bestätigungsnachricht und sendet diese in Vorwärtsrichtung über den durch die ausgewählte Antwortnachricht zurückgelegten Netzwerkpfad an den Zielknoten.

Das Nachrichtenformat der Bestätigungsnachricht ist hier beispielsweise wie folgt:

| Feld | Größe |
|---|---|
| Nachrichtentyp | 4 Bit |

(fortgesetzt)

| Feld | Größe |
|---|---|
| Quelladresse | 32 Bit |
| Zieladresse | 32 Bit |
| Serviceklasse | 8 Bit |
| Routennummer | 8 Bit |

Für jeden Netzknoten gilt: Falls er eine solche Bestätigungsnachricht empfängt, fügt er einen entsprechenden Eintrag in seine Routing-Tabelle ein. Dieser Eintrag enthält die Adresse des Startknotens, die Adresse des Zielknotens, die Serviceklasse, die Nummer der Route, die Adresse des die Bestätigungsnachricht sendenden Netzknotens (Vorgänger-Adresse) und die Adresse des nachfolgenden Netzknotens (Nachfolger-Adresse). Durch den Eintrag der Vorgänger-Adresse ist auch eine Datenübertragung in Rückwärtsrichtung von Ziel- zu Startknoten ermöglicht, so dass ein bidirektionaler Verbindungspfad eingerichtet wird. Eine Datenübermittlung in Richtung zum Startknoten ist insbesondere dann wichtig, wenn der Startknoten über eine Verschlechterung der Dienstgüte informiert werden soll.

Wenn der Zielknoten Z die Bestätigungsnachricht empfängt, ist die neue Route im Netzwerk aufgebaut.

Die aufgebaute Route kann durch eine vom Startknoten zum Zielknoten geleitete Abbaunachricht (Route Destruction) abgebaut werden.

Das Nachrichtenformat einer solchen Abbaunachricht ist beispielsweise wie folgt:

| Feld | Größe |
|---|---|
| Nachrichtentyp | 4 Bit |
| Quelladresse | 32 Bit |
| Zieladresse | 32 Bit |
| Serviceklasse | 8 Bit |
| Routennummer | 8 Bit |

In dem erfindungsgemäßen Verfahren verwaltet jeder Netzknoten eine Routing-Tabelle für die bidirektionale Weiterleitung von ankommenden Datenpaketen. Die Routing-Tabelle ordnet einem 4-Tupel aus Adresse des Startknotens, Adresse des Zielknotens, Serviceklasse und Routennummer eine Adresse für den nächsten Hop des Datenpakets zu. Die Adressen von Quell- und Zielknoten werden aus den entsprechenden Feldern des IP-Headers des Datenpakets entnommen. Die Serviceklasse und die Routennummer werden aus dem ToS-Feld des IP-Headers entnommen. Hierzu müssen die beiden Werte in binär kodierter Form gespeichert sein. Die Zuordnung eines an einem Zwischenknoten ankommenden Datenpakets zu einer Route ist erforderlich, da mehrere Routen über einen selben Netzknoten gehen können und somit die Möglichkeit besteht, dass Datenpakete über falsche Nachbarknoten weitergeleitet werden.

Das erfindungsgemäße Verfahren ist in der Lage, Routen hinsichtlich beliebiger Qualitätsmerkmale, für die jeweils eine Algebra definiert ist, zu optimieren. Durch eine Prüfung der mitgeführten Qualitätsmerkmale der Anfragenachrichten RREQ kann beurteilt werden, ob diese von einem jeweiligen Netzknoten bereits weitergeleitet wurden, so dass Routen mit Schleifen vermieden werden können.

Das erfindungsgemäße Verfahren kann L3-Pakete, das heißt Datenpakete aus Schicht 3 (Vermittlungs- bzw. Netzwerkschicht) des OSI-Schichtenmodells einer Verbindung zuordnen. Die Dienstgütemerkmale einer Route sind typischer Weise Verbindungsmerkmale von Schicht 1 (Bitübertragungsschicht) und Schicht 2 (Sicherungsschicht) des OSI-Modells. In den Routing-Nachrichten des Netzwerkprotokolls sind die Dienstgütemerkmale einer Route in aggregierter in einem Datencontainer mit wenigstens einer Datenspeicherstruktur gespeichert.

**Patentansprüche**

1. Verfahren zum Aufbau einer einen Startknoten (Q) mit einem Zielknoten verbindenden Route in einem reaktiven Netzwerk, mit den Schritten:

   a) der Startknoten flutet das Netzwerk im Broadcast-Verfahren mit Anfragenachrichten, RREQ, in denen wenigstens eine Datenspeicherstruktur für Maßzahlen von Dienstgütemerkmalen enthalten ist, mit Ausnahme einer Korrelationskenngröße, die eine Abstandskorrelation des von einer jeweiligen Anfragenachricht zurückgelegten Netzwerkpfads zu einer Referenzroute im Netzwerk beschreibt;
   b) ein eine Anfragenachricht verarbeitender Netzknoten aktualisiert die in der Anfragenachricht enthaltenen Maßzahlen;

c) jeder vom Zielknoten (Z) Verschiedene Netzknoten (I) puffert eine während einer ersten Ablaufzeit, $T_1$ und während einer nach der ersten Ablaufzeit endenden zweiten Ablaufzeit, $T_2$, empfangene Anfragenachricht, falls eine Bewertung der Maßzahlen der empfangenen Anfragenachricht mittels einer Bewertungsregel ergibt, dass mindestens eine Maßzahl der empfangenen Anfragenachricht besser ist als die entsprechende Maßzahl einer jeden bereits gepufferten Anfragenachricht, wobei diese Anfragenachricht nicht gepuffert wird, falls alle Maßzahlen der empfangenen Anfragenachricht jeweils nicht besser sind als die Maßzahlen mindestens einer bereits gepufferten Anfragenachricht;

d) jeder vom Zielknoten (Z) verschiedene Netzknoten (I) wendet auf die Maßzahlen der Dienstgütemerkmale einer jeden gepufferten Anfragenachricht eine erste Bewertungsfunktion zur gewichteten Bewertung von Maßzahlen für Dienstgütemerkmale an, wodurch für jede Anfragenachricht ein erstes Bewertungsergebnis erhalten wird;

e) jeder vom Zielknoten (Z) verschiedene Netzknoten (I) wählt aus den während der ersten Ablaufzeit gepufferten Anfragenachrichten eine Anfragenachricht gemäß einer ersten Auswahlregel für die ersten Bewertungsergebnisse aus, welche mit jeweils aktualisierten Maßzahlen im Broadcast-Verfahren an die benachbarten Netzknoten ausgesendet wird,

f) der Zielknoten (Z) puffert während einer dritten Ablaufzeit, $T_3$, empfangene Anfragenachrichten, wendet auf die Maßzahlen der Dienstgütemerkmale der gepufferten Anfragenachrichten jeweils eine zweite Bewertungsfunktion zur gewichteten Bewertung von Maßzahlen für Dienstgütemerkmale an, wodurch für jede gepufferte Anfragenachricht ein zweites Bewertungsergebnis erhalten wird, wählt nach Ablauf der dritten Ablaufzeit wenigstens eine Anfragenachricht gemäß einer zweiten Auswahlregel für die zweiten Bewertungsergebnisse aus und sendet eine Antwortnachricht, RREP, an einen benachbarten Netzknoten in Rückwärtsrichtung entsprechend des von der ausgewählten Anfragenachricht zurückgelegten Netzwerkpfads;

g) jeder die Antwortnachricht, RREP, empfangende Netzknoten prüft, ob eine während der zweiten Ablaufzeit gepufferte Anfragenachricht gemäß der ersten Auswahlregel ein besseres Bewertungsergebnis hat als die nach Ablauf der ersten Ablaufzeit gesendete Anfragenachricht, wobei er die Antwortnachricht in Rückwärtsrichtung entlang des Netzwerkpfads der vom Zielknoten ausgewählten Anfragenachricht an den nächsten Netzknoten weiterleitet, falls im Netzknoten keine besser bewertete Anfragenachricht vorhanden ist, und die Antwortnachricht in Rückwärtsrichtung entlang des von der besser bewerteten Anfragenachricht zurückgelegten Netzwerkpfads an den nächsten Netzknoten weiterleitet, falls im Netzknoten eine besser bewertete Anfragenachricht vorhanden ist.

2. Verfahren nach Anspruch 1, bei welchem ein eine Anfragenachricht verarbeitender Netzknoten eine in der Anfragenachricht enthaltene Maßzahl eines Dienstgütemerkmals aktualisiert durch Anwenden einer Aggregationsfunktion auf die in der Anfragenachricht enthaltene Maßzahl und eine diesen Netzknoten betreffende Maßzahl desselben Dienstgütemerkmals.

3. Verfahren nach Anspruch 2, bei welchem ein eine Anfragenachricht verarbeitender Netzknoten eine in der Anfragenachricht enthaltene Maßzahl eines Dienstgütemerkmals aktualisiert durch Anwenden einer Aggregationsfunktion auf die in der Anfragenachricht gespeicherte Maßzahl und eine für den Datenlink eines nächsten Hops der Anfragenachricht geltende Maßzahl desselben Dienstgütemerkmals.

4. Verfahren nach Anspruch 2, bei welchem ein eine Anfragenachricht verarbeitender Netzknoten eine in der Anfragenachricht enthaltene Maßzahl eines Dienstgütemerkmals aktualisiert durch Anwenden einer Aggregationsfunktion auf die in der Anfragenachricht gespeicherte Maßzahl und eine für den Datenlink des unmittelbar vorhergehenden Hops der Anfragenachricht geltende Maßzahl desselben Dienstgütemerkmals.

5. Verfahren nach einem der Ansprüche 1 bis 4, bei welchem ein vom Zielknoten verschiedener Netzknoten die Maßzahlen der Dienstgütemerkmale aktualisiert und anschließend die erste Bewertungsfunktion zur gewichteten Bewertung von Maßzahlen für Dienstgütemerkmale anwendet.

6. Verfahren nach einem der Ansprüche 1 bis 4, bei welchem ein vom Zielknoten verschiedener Netzknoten die erste Bewertungsfunktion zur gewichteten Bewertung von Maßzahlen für Dienstgütemerkmale anwendet und anschließend die Maßzahlen der Dienstgütemerkmale aktualisiert.

7. Verfahren nach einem der Ansprüche 1 bis 6, bei welchem der Zielknoten die Maßzahlen der Dienstgütemerkmale aktualisiert und anschließend die zweite Bewertungsfunktion zur gewichteten Bewertung von Maßzahlen für Dienstgütemerkmale anwendet.

8. Verfahren nach einem der Ansprüche 1 bis 6, bei welchem der Zielknoten die zweite Bewertungsfunktion zur gewichteten Bewertung von Maßzahlen für Dienstgütemerkmale anwendet und anschließend die Maßzahlen der Dienstgütemerkmale aktualisiert.

9. Verfahren nach einem der Ansprüche 1 bis 8, bei welchem eine Maßzahl besser bewertet wird als eine andere Maßzahl, falls die eine Maßzahl größer ist als die andere Maßzahl, wobei die eine Maßzahl schlechter bewertet wird als die andere Maßzahl, falls die eine Maßzahl nicht größer ist als die andere Maßzahl.

10. Verfahren nach einem der Ansprüche 1 bis 8, bei welchem eine Maßzahl besser bewertet wird als eine andere Maßzahl, falls die eine Maßzahl kleiner ist als die andere Maßzahl, wobei die eine Maßzahl schlechter bewertet wird als die andere Maßzahl, falls die eine Maßzahl nicht kleiner ist als die andere Maßzahl.

11. Verfahren nach einem der Ansprüche 1 bis 10, bei welchem der Startknoten nach Empfang der Antwortnachricht eine Bestätigungsnachricht generiert, welche an den Zielknoten gesendet wird.

12. Verfahren nach einem der Ansprüche 1 bis 11, bei welchem eine von einem Netzknoten empfangene Antwortnachricht nur dann weitergeleitet wird, falls die zweite Ablaufzeit noch nicht abgelaufen ist.

13. Verfahren nach einem der Ansprüche 1 bis 12, bei welchem

    a) der Zielknoten nach Ablauf der dritten Ablaufzeit eine Mehrzahl Anfragenachrichten gemäß einer dritten Auswahlregel für die zweiten Bewertungsergebnisse auswählt und jeweils eine mit den zugehörigen Dienstgütemerkmalen der ausgewählten Anfragenachrichten versehene Antwortnachricht an die benachbarten Netzknoten in Rückwärtsrichtung entsprechend den von den ausgewählten Anfragenachrichten jeweils zurückgelegten Netzwerkpfaden sendet;
    b) jeder eine Antwortnachricht empfangende Netzknoten die Maßzahlen der Antwortnachrichten aktualisiert und prüft, ob eine nach Ablauf der ersten Ablaufzeit gepufferte Anfragenachricht gemäß der ersten Auswahlregel ein besseres Bewertungsergebnis hat als die nach Ablauf der ersten Ablaufzeit gesendete Anfragenachricht, wobei er für den einen Fall, dass im Netzknoten keine besser bewertete Anfragenachricht vorhanden ist, die Antwortnachricht in Rückwärtsrichtung entlang des zurückgelegten Netzwerkpfads der vom Zielknoten ausgewählten Anfragenachricht an den nächsten Netzknoten weiterleitet, und für den anderen Fall, dass im Netzknoten eine besser bewertete Anfragenachricht vorhanden ist, die Antwortnachricht in Rückwärtsrichtung entlang des von der besser bewerteten Anfragenachricht zurückgelegten Netzwerkpfads an den nächsten Netzknoten weiterleitet;
    c) der Startknoten während einer vierten Ablaufzeit empfangene Antwortnachrichten puffert, eine dritte Bewertungsfunktion zur gewichteten Bewertung von Dienstgütemerkmalen auf die Maßzahlen für Dienstgütermerkmale der gepufferten Antwortnachrichten anwendet, wodurch für jede Antwortnachricht ein viertes Bewertungsergebnis erhalten wird, nach Ablauf der vierten Ablaufzeit eine Antwortnachricht gemäß einer vierten Auswahlregel für die vierten Bewertungsergebnisse auswählt und eine Bestätigungsnachricht in Vorwärtsrichtung über den durch die ausgewählte Antwortnachricht zurückgelegten Netzwerkpfad an den Zielknoten sendet.

14. Verfahren nach einem der Ansprüche 1 bis 13, bei welchem jeder Netzknoten mit allen seinen benachbarten Netzknoten Routeninformationsnachrichten austauscht, wobei in jeder Routeninformationsnachricht Daten enthalten sind, welche beschreiben, ob ein die Routeninformationsnachricht sendender Netzknoten Teil einer im Netzwerk eingerichteten Route ist.

15. Verfahren nach einem der Ansprüche 1 bis 13, bei welchem jeder Netzknoten mit seinen benachbarten Netzknoten Routeninformationsnachrichten austauscht, wobei in jeder Routeninformationsnachricht Daten enthalten sind, welche beschreiben, ob ein zu dem die Routeninformationsnachricht sendenden Netzknoten benachbarter Netzknoten Teil einer im Netzwerk eingerichteten Route ist.

16. Verfahren nach einem der Ansprüche 1 bis 13, bei welchem jeder Netzknoten mit seinen benachbarten Netzknoten Routeninformationsnachrichten austauscht, wobei in jeder Routeninformationsnachricht Daten enthalten sind, welche beschreiben, ob ein zu dem die Routeninformationsnachricht sendenden Netzknoten innerhalb einer 1-Hop-, 2-Hop- oder 3-Hop-Nachbarschaft benachbarter Netzknoten Teil einer im Netzwerk eingerichteten Route ist.

17. Verfahren nach einem der Ansprüche 1 bis 16, bei welchem die erste, zweite und dritte Bewertungsfunktion gleich sind.

**18.** Netzknoten eines Netzwerks aus datentechnisch miteinander verbundenen Netzknoten, welcher zur Durchführung eines Verfahrens nach einem der Ansprüche 1 bis 17 geeignet eingerichtet ist.

**Claims**

**1.** Method for constructing a route connecting a source node (Q) to a destination node in a reactive network, comprising the steps:

a) the source node uses the broadcast method to flood the network with route request messages, RREQ, contained in which there is at least one data storage structure for metrics of quality-of-service features, with the exception of a correlation parameter which describes a distance correlation of the network path travelled by a respective route request message to a reference route in the network;

b) a network node processing a route request message updates the metrics contained in the route request message;

c) each network node (I) that is different from the destination node (Z) buffers a route request message received during a first timeout period, $T_1$, and during a second timeout period, $T_2$, ending after the first timeout period if the result of an evaluation of the metrics of the received route request message by means of an evaluation rule is that at least one metric of the received route request message is better than the corresponding metric of any already buffered route request message, wherein said route request message is not buffered if all the metrics of the received route request message are not better in each case than the metrics of at least one already buffered route request message;

d) each network node (I) that is different from the destination node (Z) applies a first evaluation function for the weighted evaluation of metrics for quality-of-service features to the metrics of the quality-of-service features of any buffered route request message, thereby obtaining a first evaluation result for each route request message;

e) each network node (I) that is different from the destination node (Z) selects, from the route request messages buffered during the first timeout period, one route request message in accordance with a first selection rule for the first evaluation results, which route request message is transmitted using the broadcast method with updated metrics in each case to the neighbouring network nodes;

f) during a third timeout period, $T_3$, the destination node (Z) buffers received route request messages, applies a second evaluation function for the weighted evaluation of metrics for quality-of-service features to each of the metrics of the quality-of-service features of the buffered route request messages, thereby obtaining a second evaluation result for each buffered route request message, after expiration of the third timeout period selects at least one route request message in accordance with a second selection rule for the second evaluation results and sends a route reply message, RREP, to a neighbouring network node in the reverse direction corresponding to the network path travelled by the selected route request message;

g) each network node receiving the route reply message, RREP, checks whether a route request message buffered during the second timeout period in accordance with the first selection rule has a better evaluation result than the route request message sent after expiration of the first timeout period, wherein the node forwards the route reply message in the reverse direction along the network path of the route request message selected by the destination node to the next network node if no route request message with a better evaluation result is present in the network node, and forwards the route reply message in the reverse direction along the network path travelled by the route request message with the better evaluation result to the next network node if a route request message with a better evaluation result is present in the network node.

**2.** Method according to claim 1, wherein a network node processing a route request message updates a metric of a quality-of-service feature contained in the route request message by applying an aggregation function to the metric contained in the route request message and to a metric of the same quality-of-service feature relating to said network node.

**3.** Method according to claim 2, wherein a network node processing a route request message updates a metric of a quality-of-service feature contained in the route request message by applying an aggregation function to the metric stored in the route request message and to a metric of the same quality-of-service feature that is valid for the data link of a next hop of the route request message.

**4.** Method according to claim 2, wherein a network node processing a route request message updates a metric of a quality-of-service feature contained in the route request message by applying an aggregation function to the metric stored in the route request message and to a metric of the same quality-of-service feature that is valid for the data link of the immediately preceding hop of the route request message.

5. Method according to one of claims 1 to 4, wherein a network node that is different from the destination node updates the metrics of the quality-of-service features and subsequently applies the first evaluation function for the weighted evaluation of metrics for quality-of-service features.

6. Method according to one of claims 1 to 4, wherein a network node that is different from the destination node applies the first evaluation function for the weighted evaluation of metrics for quality-of-service features and subsequently updates the metrics of the quality-of-service features.

7. Method according to one of claims 1 to 6, wherein the destination node updates the metrics of the quality-of-service features and subsequently applies the second evaluation function for the weighted evaluation of metrics for quality-of-service features.

8. Method according to one of claims 1 to 6, wherein the destination node applies the second evaluation function for the weighted evaluation of metrics for quality-of-service features and subsequently updates the metrics of the quality-of-service features.

9. Method according to one of claims 1 to 8, wherein one metric is rated better than another metric if said one metric is greater than the other metric, with said one metric being rated worse than the other metric if said one metric is not greater than the other metric.

10. Method according to one of claims 1 to 8, wherein one metric is rated better than another metric if said one metric is less than the other metric, with said one metric being rated worse than the other metric if said one metric is not less than the other metric.

11. Method according to one of claims 1 to 10, wherein after receiving the route reply message the source node generates a confirmation message which is sent to the destination node.

12. Method according to one of claims 1 to 11, wherein a route reply message received by a network node is forwarded only if the second timeout period has not yet expired.

13. Method according to one of claims 1 to 12, wherein

a) after expiration of the third timeout period the destination node selects a plurality of route request messages in accordance with a third selection rule for the second evaluation results and in each case sends a route reply message provided with the associated quality-of-service features of the selected route request messages to the neighbouring network nodes in the reverse direction corresponding to the network paths travelled by each of the selected route request messages;
b) each network node receiving a route reply message updates the metrics of the route reply messages and checks whether a route request message buffered in accordance with the first selection rule after expiration of the first timeout period has a better evaluation result than the route request message sent after expiration of the first timeout period, wherein for the one case in which no route request message with a better evaluation result is present in the network node, the route reply message is forwarded in the reverse direction along the network path travelled by the route request message selected by the destination node to the next network node, and for the other case in which a route request message with a better evaluation result is present in the network node, the route reply message is forwarded in the reverse direction along the network path travelled by the route request message with the better evaluation result to the next network node;
c) the source node buffers route reply messages received during a fourth timeout period, applies a third evaluation function for the weighted evaluation of quality-of-service features to the metrics for quality-of-service features of the buffered route reply messages, whereby a fourth evaluation result is obtained for each route reply message, selects a route reply message in accordance with a fourth selection rule for the fourth evaluation results after expiration of the fourth timeout period, and sends a confirmation message in the forward direction over the network path travelled by the selected route reply message to the destination node.

14. Method according to one of claims 1 to 13, wherein each network node exchanges route information messages with all of its neighbouring network nodes, with each route information message containing data describing whether a network node sending the route information message is part of a route that is established in the network.

**15.** Method according to one of claims 1 to 13, wherein each network node exchanges route information messages with its neighbouring network nodes, with each route information message containing data describing whether a neighbouring network node to the network node sending the route information message is part of a route established in the network.

**16.** Method according to one of claims 1 to 13, wherein each network node exchanges route information messages with its neighbouring network nodes, with each route information message containing data describing whether a neighbouring network node to the network node sending the route information message within a 1-hop, 2-hop or 3-hop neighbourhood is part of a route established in the network.

**17.** Method according to one of claims 1 to 16, wherein the first, second and third evaluation functions are identical.

**18.** Network node of a network consisting of network nodes which are interconnected for data communication purposes, which network node is suitably configured for implementing a method according to one of claims 1 to 17.

## Revendications

**1.** Procédé pour établir une route reliant un noeud de départ (Q) et un noeud de destination dans un réseau réactif, comportant les étapes suivantes :

a) le noeud de départ, par le procédé de diffusion générale, inonde le réseau de messages de requête RREQ qui contiennent au moins une structure de stockage de données pour des chiffres d'indices de caractéristiques de qualité de service à l'exception d'une caractéristique de corrélation qui décrit une corrélation de distance entre le chemin de réseau parcouru par un message de requête respectif et une route de référence dans le réseau ;

b) un noeud de réseau traitant un message de requête actualise les chiffres d'indices contenus dans le message de requête ;

c) chaque noeud de réseau (I) différent du noeud de destination (Z) met en mémoire tampon un message de requête reçu pendant une première durée T1 et pendant une deuxième durée T2 expirant après la première durée s'il ressort d'une évaluation des chiffres d'indices du message de requête reçu effectuée au moyen d'une règle d'évaluation qu'au moins un chiffre d'indice du message de requête reçu est meilleur que le chiffre d'indice correspondant de tout message de requête déjà mis en mémoire tampon, ce message de requête n'étant pas mis en mémoire tampon si tous les chiffres d'indices du message de requête reçu ne sont respectivement pas meilleurs que les chiffres d'indices d'au moins un message de requête déjà mis en mémoire tampon ;

d) chaque noeud de réseau (I) différent du noeud de destination (Z) applique aux chiffres d'indices des caractéristiques de qualité de service de tout message de requête mis en mémoire tampon une première fonction d'évaluation aux fins de l'évaluation pondérée de chiffres d'indices pour des caractéristiques de qualité de service, ce dont il résulte un premier résultat d'évaluation pour chaque message de requête ;

e) chaque noeud de réseau (I) différent du noeud de destination (Z) sélectionne, parmi les messages de requête mis en mémoire tampon pendant la première durée, un message de requête selon une première règle de sélection pour les premiers résultats d'évaluation, lequel message est envoyé aux noeuds de réseau voisins par le procédé de diffusion générale avec des chiffres d'indices respectivement actualisés ;

f) le noeud de destination (Z) met en mémoire tampon des messages de requête reçus pendant une troisième durée T3, applique aux chiffres d'indices des caractéristiques de qualité de service des messages de requête mis en mémoire tampon respectivement une deuxième fonction d'évaluation aux fins de l'évaluation pondérée de chiffres d'indices pour des caractéristiques de qualité de service, ce dont il résulte un deuxième résultat d'évaluation pour chaque message de requête mis en mémoire tampon, sélectionne, après l'expiration de la troisième durée, au moins un message de requête selon une deuxième règle de sélection pour les deuxièmes résultats d'évaluation et envoie un message de réponse RREP à un noeud de réseau voisin dans le sens retour conformément au chemin de réseau parcouru par le message de requête sélectionné ;

g) chaque noeud de réseau qui reçoit le message de réponse RREP contrôle si un message de requête mis en mémoire tampon pendant la deuxième durée a, selon la première règle de sélection, un meilleur résultat d'évaluation que le message de requête émis après l'expiration de la première durée, ledit noeud retransmettant le message de réponse au noeud de réseau suivant dans le sens retour le long du chemin de réseau du message de requête sélectionné par le noeud de destination s'il n'y a pas de message de requête mieux évalué dans le noeud de réseau, et retransmettant le message de réponse au noeud de réseau suivant dans le sens retour le long du chemin de réseau parcouru par le message de requête mieux évalué s'il y a un message de requête mieux évalué dans le noeud de réseau.

2. Procédé selon la revendication 1, dans lequel un noeud de réseau qui traite un message de requête actualise un chiffre d'indice d'une caractéristique de qualité de service contenu dans le message de requête en appliquant une fonction d'agrégation au chiffre d'indice contenu dans le message de requête et à un chiffre d'indice de la même caractéristique de qualité de service qui concerne ce noeud de réseau.

3. Procédé selon la revendication 2, dans lequel un noeud de réseau qui traite un message de requête actualise un chiffre d'indice d'une caractéristique de qualité de service contenu dans le message de requête en appliquant une fonction d'agrégation au chiffre d'indice stocké dans le message de requête et à un chiffre d'indice de la même caractéristique de qualité de service qui est valable pour le lien de données d'un saut suivant du message de requête.

4. Procédé selon la revendication 2, dans lequel un noeud de réseau qui traite un message de requête actualise un chiffre d'indice d'une caractéristique de qualité de service contenu dans le message de requête en appliquant une fonction d'agrégation au chiffre d'indice stocké dans le message de requête et à un chiffre d'indice de la même caractéristique de qualité de service qui est valable pour le lien de données du saut directement précédent du message de requête.

5. Procédé selon l'une des revendications 1 à 4, dans lequel un noeud de réseau différent du noeud de destination actualise les chiffres d'indices des caractéristiques de qualité de service et applique ensuite la première fonction d'évaluation aux fins de l'évaluation pondérée de chiffres d'indices pour des caractéristiques de qualité de service.

6. Procédé selon l'une des revendications 1 à 4, dans lequel un noeud de réseau différent du noeud de destination applique la première fonction d'évaluation aux fins de l'évaluation pondérée de chiffres d'indices pour des caractéristiques de qualité de service et actualise ensuite les chiffres d'indices des caractéristiques de qualité de service.

7. Procédé selon l'une des revendications 1 à 6, dans lequel le noeud de destination actualise les chiffres d'indices des caractéristiques de qualité de service et applique ensuite la deuxième fonction d'évaluation aux fins de l'évaluation pondérée de chiffres d'indices pour des caractéristiques de qualité de service.

8. Procédé selon l'une des revendications 1 à 6, dans lequel le noeud de destination applique la deuxième fonction d'évaluation aux fins de l'évaluation pondérée de chiffres d'indices pour des caractéristiques de qualité de service et actualise ensuite les chiffres d'indices des caractéristiques de qualité de service.

9. Procédé selon l'une des revendications 1 à 8, dans lequel un chiffre d'indice est mieux évalué qu'un autre chiffre d'indice si l'un est supérieur à l'autre chiffre d'indice, un chiffre d'indice étant moins bien évalué que l'autre chiffre d'indice si l'un n'est pas supérieur à l'autre chiffre d'indice.

10. Procédé selon l'une des revendications 1 à 8, dans lequel un chiffre d'indice est mieux évalué qu'un autre chiffre d'indice si l'un chiffre est inférieur à l'autre chiffre d'indice, un chiffre d'indice étant moins bien évalué que l'autre chiffre d'indice si l'un n'est pas inférieur à l'autre chiffre d'indice.

11. Procédé selon l'une des revendications 1 à 10, dans lequel le noeud de départ génère, après la réception du message de réponse, un message de confirmation qui est envoyé au noeud de destination.

12. Procédé selon l'une des revendications 1 à 11, dans lequel un message de réponse reçu par un noeud de réseau n'est retransmis que si la deuxième durée n'a pas encore expiré.

13. Procédé selon l'une des revendications 1 à 12, dans lequel :

a) le noeud de destination sélectionne, après l'expiration de la troisième durée, une pluralité de messages de requête selon une troisième règle de sélection pour les deuxièmes résultats d'évaluation et envoie respectivement un message de réponse pourvu des caractéristiques de qualité de service associées des messages de requête sélectionnés aux noeuds de réseau voisins dans le sens retour conformément aux chemins de réseau respectivement parcourus par les messages de requête sélectionnés ;

b) chaque noeud de réseau qui reçoit un message de réponse actualise les chiffres d'indices des messages de réponse et contrôle si un message de requête mis en mémoire tampon après l'expiration de la première durée a, selon la première règle de sélection, un meilleur résultat d'évaluation que le message de requête émis après l'expiration de la première durée, ledit noeud retransmettant le message de réponse au noeud de réseau suivant dans le sens retour le long du chemin de réseau parcouru du message de requête sélectionné par le noeud de destination dans le cas où il n'y a pas de message de requête mieux évalué dans le noeud de réseau, et retransmettant le message de réponse au noeud de réseau suivant dans le sens retour le long du chemin de réseau parcouru par le message de requête mieux évalué dans l'autre cas où il y a un message de requête mieux évalué dans le noeud de réseau ;

c) le noeud de départ met en mémoire tampon des messages de réponse reçus pendant une quatrième durée, applique une troisième fonction d'évaluation aux fins de l'évaluation pondérée de caractéristiques de qualité de service aux chiffres d'indices pour des caractéristiques de qualité de service des messages de réponse mis en mémoire tampon, ce dont il résulte un quatrième résultat d'évaluation pour chaque message de réponse, sélectionne un message de réponse selon une quatrième règle de sélection pour les quatrièmes résultats d'évaluation après l'expiration de la quatrième durée et envoie au noeud de destination un message de confirmation dans le sens aller sur le chemin de réseau parcouru par le message de réponse sélectionné.

**14.** Procédé selon l'une des revendications 1 à 13, dans lequel chaque noeud de réseau échange des messages d'information de routage avec tous ses noeuds de réseau voisins, chaque message d'information de routage contenant des données qui décrivent si un noeud de réseau qui émet le message d'information de routage est une partie d'une route aménagée dans le réseau.

**15.** Procédé selon l'une des revendications 1 à 13, dans lequel chaque noeud de réseau échange des messages d'information de routage avec ses noeuds de réseau voisins, chaque message d'information de routage contenant des données qui décrivent si un noeud de réseau voisin du noeud de réseau qui émet le message d'information de routage est une partie d'une route aménagée dans le réseau.

**16.** Procédé selon l'une des revendications 1 à 13, dans lequel chaque noeud de réseau échange des messages d'information de routage avec ses noeuds de réseau voisins, chaque message d'information de routage contenant des données qui décrivent si un noeud de réseau voisin, dans un voisinage de 1 saut, de 2 sauts ou de 3 sauts, du noeud de réseau qui émet le message d'information de routage est une partie d'une route aménagée dans le réseau.

**17.** Procédé selon l'une des revendications 1 à 16, dans lequel les première, deuxième et troisième fonctions d'évaluation sont identiques.

**18.** Noeud de réseau d'un réseau de noeuds de réseau reliés entre eux par la technique des données, lequel est aménagé de manière appropriée pour exécuter un procédé selon l'une des revendications 1 à 17.

FIG 1

EP 2 034 674 B1

# FIG 2

EP 2 034 674 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1564938 A